## Europäisches Patentamt
## European Patent Office
## Office européen des brevets

(19)

(11) Veröffentlichungsnummer: **0 181 461**
**B1**

(12) **EUROPÄISCHE PATENTSCHRIFT**

(45) Veröffentlichungstag der Patentschrift: **11.04.90**

(51) Int. Cl.⁵: **G 06 K 13/07**

(21) Anmeldenummer: **85111562.6**

(22) Anmeldetag: **13.09.85**

(54) **Vorrichtung zum reibschlüssigen Transport eines kartenförmigen Aufzeichnungsträgers.**

(30) Priorität: **15.11.84 DE 3441849**

(43) Veröffentlichungstag der Anmeldung:
**21.05.86 Patentblatt 86/21**

(45) Bekanntmachung des Hinweises auf die
Patenterteilung:
**11.04.90 Patentblatt 90/15**

(84) Benannte Vertragsstaaten:
**DE FR GB IT NL SE**

(56) Entgegenhaltungen:
**DE-A-2 538 546**
**DE-A-2 718 922**
**DE-C-1 244 660**

(73) Patentinhaber: **Nixdorf Computer
Aktiengesellschaft
Fürstenallee 7
D-4790 Paderborn (DE)**

(72) Erfinder: **Holland-Letz, Günter
Antoniusstrasse 17a
D-4790 Paderborn (DE)**

(74) Vertreter: **Schaumburg, Thoenes & Englaender
Mauerkircherstrasse 31 Postfach 86 07 48
D-8000 München 86 (DE)**

Courier Press, Leamington Spa, England.

EP 0 181 461 B1

**Beschreibung**

Die Erfindung betrifft eine Vorrichtung zum reibschlüssigen Transport eines kartenförmigen Aufzeichnungsträgers, insbesondere einer Identifizierungskarte, relativ zu einer Auswertevorrichtung, die an einem sich zwischen einer Eintritts- und einer Austritts- bzw. Umkehrstelle erstreckenden geradlinigen Förderweg angeordnet ist.

Transporteinrichtungen dieser Art werden beispielsweise in Scheckkarten-Geldautomaten oder Ausweiskontrolleinrichtungen eingesetzt. Mit ihrer Hilfe können kartenförmige, mit sichtbaren oder unsichtbaren Informationszeichen versehene Aufzeichnungsträger, die an einer Eintrittsstelle der Transporteinrichtung zuzuführen sind, an einer Auswertevorrichtung vorbeigeführt werden, um festzustellen, ob der jeweilige Inhaber des Aufzeichnungsträgers zur Vornahme bestimmter Handlungen, beispielsweise Geld aus einem Geldautomaten zu entnehmen, berechtigt ist. Anschließend kann der Aufzeichnungsträger an einer separaten Austrittsstelle ausgegeben werden. Eine andere Möglichkeit der Ausgabe des Aufzeichnungsträgers besteht darin, bei dessen Erreichen einer Umkehrstelle die Transporteinrichtung hinsichtlich ihrer Bewegungsrichtung umzusteuern, so daß der Aufzeichnungsträger an der Eintrittsstelle auch wieder ausgegeben wird.

Die Auswertevorrichtung arbeitet je nach Art der auf dem Aufzeichnungsträger vorgesehenen Informationszeichen nach elektromagnetischem, elektrostatischem oder optischem Prinzip. Wenn die kartenförmigen Aufzeichnungsträger identifiziert bzw. gelesen werden sollen, müssen sie mit gleichmäßiger Geschwindigkeit und mit gleichmäßigem Abstand zur Auswertevorrichtung an dieser vorbeibewegt werden, um fehlerhafte Auswertungen zu vermeiden.

Die kartenförmigen Aufzeichnungsträger bestehen in der Regel aus einem elastischen, relativ biegesteifen Kunststoff. Es hat sich jedoch gezeigt, daß solche Aufzeichnungsträger je nach Alter und Häufigkeit der Benutzung sowie Lagerung im Laufe der Zeit auch verbiegen können, so daß sie beim Transport an der Auswertevorrichtung vorbei in Folge ihrer Formänderung einen ungleichmäßigen Abstand haben. Dadurch ist es erforderlich, die zur Bewegung der kartenförmigen Aufzeichnungsträger vorgesehene Transportvorrichtung so auszuführen, daß auch gebogene Karten in gerader Ausrichtung an der Auswertevorrichtung vorbeigeführt werden. Die bisher bekannten Einrichtungen sind hierzu mindestens im Bereich der Auswertevorrichtung mit kostspieligen Rollenmechanismen versehen, die in der Regel aus einer Vielzahl beidseitig auf die kartenförmigen Aufzeichnungsträger einwirkender Rollen bestehen. Mit solchen Rollenförderern ist aber eine gerade Ausrichtung der kartenförmigen Aufzeichnungsträger nur unzureichend möglich, da die auf den Aufzeichnungsträger einwirkenden Rollenpaare einen im Vergleich zur Länge des Aufzeichnungsträgers großen Abstand zueinander haben. Solche Rollenförderer sind darüber hinaus nur bedingt geeignet, die kartenförmigen Aufzeichnungsträger mit gleichförmiger Geschwindigkeit an der Auswertevorrichtung vorbeizubewegen, da sowohl beim Eintritt eines Aufzeichnungsträgers in ein Rollenpaar als auch beim Austritt aus einem Rollenpaar sogenannte Geschwindigkeits-Stoßspitzen auftreten. Außerdem neigen Rollenmechanismen zu Betriebsstörungen, die dadurch verursacht werden können, daß sich verbogene Karten um einzelne Rollen herumwickeln oder daß die Mitnahmekraft der Rollen nicht ausreicht, um den Aufzeichnungsträger in der gewünschten Weise zu beschleunigen. Letzteres ist darauf zurückzuführen, daß die Reibfläche der Rollen mit dem Aufzeichnungsträger sehr klein ist. Bei dieser kleinen Reibfläche wird darüber hinaus eine besonders schnelle Oberflächenglättung begünstigt, wodurch die Reibkraft zur Beschleunigung des Aufzeichnungsträgers weiter sinkt.

Rollenförderer haben weiter den Nachteil, daß sie auf Grund der verwendeten Rollenmechanismen nur mit einem großen Kostenaufwand herstellbar sind.

Wie aus der vorstehenden Erläuterung zu entnehmen ist, sind alle Nachteile eines Rollenförderers auf die Verwendung von Rollen als Transportelemente zurückzuführen.

Die DE-A-2 718 922 beschreibt eine Transportvorrichtung für band- oder blattförmige Aufzeichnungsträger. Diese Transportvorrichtung soll so arbeiten, daß der Aufzeichnungsträger während des Transports in seiner Breite gespannt und zwischen den Transportelementen vollkommen frei gehalten wird. Erreicht wird dies dadurch, daß der band- oder blattförmige Aufzeichnungsträger mit zwei Endlosriemen transportiert wird, die an seinen Längsrändern wirksam werden. Dabei wird der Aufzeichnungsträger von oben her an jeden Endlosriemen mit einer Reibwalze angedrückt, deren Längsachse in Transportrichtung liegt und die kontinuierlich so gedreht wird, daß der Aufzeichnungsträger quer zur Transportrichtung durch die beiden Reibwalzen gespannt wird.

Die bekannte Transportvorrichtung benötigt also zwei Transportvorrichtungen und zwei Reibwalzen, die jeweils in vorbestimmter Richtung gedreht und dabei gegen den Aufzeichnungsträger bzw. den zugeordneten Transportriemen gedrückt werden müssen, um den Aufzeichnungsträger laufend quer zur Transportrichtung zu spannen.

Es ist Aufgabe der Erfindung, eine Vorrichtung der eingangs genannten Art anzugeben, bei der mindestens im Bereich der Auswertevorrichtung Rollen als direkt auf den Aufzeichnungsträger einwirkende Transportelemente vermieden werden.

Diese Aufgabe wird für eine Transportvorrichtung eingangs genannter Art erfindungsgemäß dadurch gelöst, daß der geradlinige Förderweg einerseits durch einen Abschnitt eines Endlosbandförderers und andererseits durch eine etwa parallel zu diesem Abschnitt verlaufende, in Richtung zum Endlosbandförderer bewegbare Andruckleiste begrenzt ist, daß die Andruckleiste mittels einer Andruckeinrichtung in Richtung zum Endlosbandförderer belastet ist, und daß der Endlosbandförderer und die Andruckleiste so ausgebildet sind, daß Krümmungen des Aufzeichnungsträgers durch seine Führung zwischen dem Endlosbandförderer und der Andruckleiste beseitigt werden.

Durch die Verwendung des Endlosbandförderers zusammen mit der Andruckleiste können alle vorstehend genannten, durch den Rollenmechanismus bedingten Nachteile vermieden werden. Da der kartenförmige Aufzeichnungsträger beim Transport zwischen dem Endlosbandförderer, dessen Förderband ohne weiteres straff vorgespannt werden kann, und der Andruckleiste bewegt wird, und da sowohl das straff spannbare Förderband als auch die Andruckleiste flächig an dem Aufzeichnungsträger anliegen, kann eine etwaige Krümmung desselben in Kartenlängsrichtung zuverlässig beseitigt werden, was sich auch vorteilhaft gegen eine Krümmung in Kartenquerrichtung auswirkt.

Auch kann mit der erfindungsgemäßen Transportvorrichtung zumindest im Bereich der Auswertevorrichtung ein gegenüber einem Rollenmechanismus deutlich verbesserter Gleichlauf eines kartenförmigen Aufzeichnungsträgers gewährleistet werden, da die den Gleichlauf beeinträchtigenden Stoßspitzen beim Rolleneintritt und -austritt des Aufzeichnungsträgers vermieden werden können.

Auf Grund der großen Reibfläche des Aufzeichnungsträgers mit dem Förderband ist eine große Beschleunigungs- und Transportkraft gegeben, wodurch ein funktionssicherer Transport des Aufzeichnungsträgers gewährleistet ist. Durch die große Reibfläche wird im Gegensatz zu der einer Transportrolle eigenen kleinen Reibfläche auch die Gefahr der Oberflächenglättung des Förderbandes so gering wie möglich gehalten. Ferner ist das Förderband auch auf Grund seiner großen Reibfläche mit dem Aufzeichnungsträger unempfindlicher gegen Verschmutzung.

Darüber hinaus läßt sich ein Endlosbandförderer im Vergleich zu einem Rollenförderer wesentlich leichter reinigen, da die Reinigung eines laufenden Förderbandes an einer einzigen Stelle möglich ist, während die an verschiedenen Stellen angeordneten Rollen eines Rollenförderers alle separat gesäubert werden müssen.

In einer bevorzugten Ausbildung der Erfindung ist das Förderband des Endlosbandförderers im Bereich der Eintrittsstelle und im Bereich der Austritts- bzw. Umkehrstelle an jeweils mindestens einer Umlenkrolle umgelenkt, wodurch sich im Bereich der Auswertevorrichtung ein weitgehend geradliniger Abschnitt ergibt. Vorteilhaft kann dabei mindestens eine der Umlenkrollen als Antriebsrolle ausgebildet sein.

In einer Weiterbildung der Erfindung ist eine der Auswertevorrichtung gegenüberliegende Stützrolle vorgesehen, die mit ihrer Umfangsfläche an der Innenseite des Förderbandes anliegt. Sie gewährleistet, daß das an sich schon sehr straff spannbare Förderband im Bereich der Auswertevorrichtung besonders fest am Aufzeichnungsträger anliegt, wodurch eine fehlerfreie Auswertung weiter begünstigt wird.

Wird das Förderband durch die Stützrolle in Richtung zur Andruckleiste um etwa die halbe Aufzeichnungsträgerdicke nach außen ausgelenkt, so ist gewährleistet, daß der Aufzeichnungsträger im Bereich der Umlenkstellen des Förderbandes weniger fest an diesem anliegt, wodurch der Einfluß der in der Regel von der Geschwindigkeit des Förderbandes im Bereich der Stützrolle abweichenden Umfangsgeschwindigkeit im Bereich der Umlenkstellen eliminiert wird.

Die vorstehend genannte Geschwindigkeitsabweichung kann dadurch beseitigt werden, daß die Umlenkrollen und die Stützrolle mit demselben Durchmesser dimensioniert werden, wodurch ein besonders gleichformiger Transport eines Aufzeichnungsträgers gewährleistet ist.

In einer weiteren Ausbildung der Erfindung sind sämtliche Förderbandrollen des Endlosbandförderers jeweils mit mindestens einer Umfangsrille versehen, in der eine Führungsrippe des Förderbandes liegt, wodurch das seitliche Abdriften des Förderbandes verhindert wird.

Vorteilhaft entspricht die Breite der Förderbandrollen etwa der Breite des Förderbandes, wodurch eine genaue Ausrichtung des Förderbandes quer zu dessen Bewegungsrichtung und somit auch eines zu transportierenden Aufzeichnungsträgers zumindest im Bereich der Auswertevorrichtung gewährleistet ist.

Da besonders bei breiten Förderbandrollen selbst bei geringen Parallelitätsfehlern eine Seitenabdrift des Förderbandes gegeben ist, ist zur Vermeidung dieser Seitenabdrift vorteilhaft mindestens eine der beiden Umlenkrollen beiderseits der sie halbierenden Durchmesserebene kegelstumpfförmig verjüngt.

Wenn die Breite des Förderbandes etwa der Breite der Auswertevorrichtung entspricht, ist durch die große Reibfläche des Förderbandes mit dem Aufzeichnungsträger eine besonders große Beschleunigungs- und Transportkraft gegeben, wodurch wiederum ein störungsfreier Betrieb gewährleistet ist.

Vorteilhaft ist die Dicke des Förderbandes kleiner als ein Millimeter, da bei dünnen Förderbändern deren Zugstrang nahe der äußeren Oberfläche liegt, wodurch die Umfangsgeschwindigkeit des Förderbandes im Bereich der Umlenkrollen mit der translatorischen Geschwindigkeit des Förderbandes an seinen geraden Abschnitten nahezu übereinstimmt. Unter Zugstrang ist dabei der Ort im Innern eines Förderbandes zu verstehen, an dem der Kraftvektor aller in Bewegungsrichtung in einem Förderband wirkenden Kräfte verläuft. Bei einem Förderband aus homogenem Material fällt der Zugstrang daher mit dem Schwerpunkt der Förderbandquerschnittsfläche zusammen.

In einer weiteren Ausbildung der Erfindung besteht das Förderband aus flexiblem Kunststoff, vorzugsweise aus einer weichen Polyurethanmischung. Das Förderband soll möglichst flexibel sein, um zumindest annähernd das Verhalten eines idealen Seiles zu haben. Das Förderband soll möglichst flexibel um die Förderbandrollen laufen, so daß zum Antrieb nur ein gleichförmiges niedriges Drehmoment benötigt wird. Außerdem soll es möglichst exakt tangential von den Förderbandrollen ablaufen, denn ein nicht tangentiales Ablaufen wäre lastabhängig und würde daher zu Gleichlaufungenauigkeiten führen. Ein weiterer Grund, einen Kunststoff als Förderbandmaterial zu wählen, ist sein geringer Verschleiß. Ein weiterer Vorteil der Verwendung eines Kunststoffes, vorzugsweise einer weichen Polyurethanmischung, ist sein hoher Reibungskoeffizient gegenüber den meist ebenfalls aus einem Kunststoff bestehenden Aufzeichnungsträgern.

Vorteilhaft ist das Förderband mit wenigstens einem nahezu dehnungsfreien Zugstrang, vorzugsweise aus Stahlcord oder Kevlar, ausgebildet, da sonst das Ablaufen des Förderbandes von der bzw. den Antriebsrollen lastabhängig wäre, was zu Gleichlaufungenauigkeiten des Förderbandes führen würde.

Vorteilhaft verlaufen die Zugstränge auf bzw. unmittelbar unter der dem Aufzeichnungsträger zugewandten Oberfläche des Förderbandes, wodurch dessen Gleichlaufeigenschaften weiter verbessert werden.

In einer Weiterbildung der Erfindung ist die Andruckleiste als gerader Stab ausgebildet, der nahe seinem einen Ende schwenkbar gelagert ist und der nahe seinem anderen Ende in Schwenkrichtung verschieblich geführt ist. Diese Ausbildung der Andruckleiste hat den Vorteil, daß sie keine aufwendigen Führungselemente benötigt und daß zur Belastung der Andruckleiste in Richtung zum Endlosbandförderer als Andruckeinrichtung eine einfache Feder, beispielsweise eine Blattfeder, verwendet werden kann.

Ist in weiterer Ausbildung der Erfindung ein Anschlagelement vorgesehen, das den Schwenkweg des anderen Endes des Stabes zum Förderband hin begrenzt, so wird vermieden, daß die Andruckleiste am Förderband schleift, was zu unnötigem Verschleiß an der Andruckleiste und am Förderband führen würde.

In einer Weiterbildung der Erfindung hat der Stab rechteckförmigen Querschnitt, wobei dem Endlosbandförderer eine Schmalseite des Stabes zugewandt ist. Dies hat einerseits den Vorteil, daß zwischen dem Aufzeichnungsträger und der stationären Andruckleiste nur eine kleine, ebene Reibfläche vorhanden ist, und andererseits den weiteren Vorteil, daß wegen der schmalen Ausbildung des Stabes ausreichend Raum für die Auswertevorrichtung verbleibt.

Vorteilhaft ist die Andruckleiste zumindest an ihrer dem Endlosbandförderer zugewandten Seite mit einem Kunststoff beschichtet, der gegenüber dem Aufzeichnungsträger einen niedrigen Reibungskoeffizienten hat, da dadurch zwischen der Andruckleiste und dem Aufzeichnungsträger eine nur geringe Reibungskraft entstehen kann, die deutlich kleiner ist als die Reibungskraft, mit der der Aufzeichnungsträger durch das Förderband des Endlosbandförderers beaufschlagt wird. Eine Kunststoffbeschichtung der Andruckleiste hat darüber hinaus den Vorteil, daß sie sehr verschleißarm ist.

In einer weiteren Ausbildung der Erfindung ist wenigstens im Bereich der Eintrittsstelle und/oder im Bereich der Austritts- bzw. Umkehrstelle zusätzlich zur Andruckleiste eine leerlaufende Andruckrolle zum Andrücken des Aufzeichnungsträgers an das Förderband des Endlosbandförderers vorgesehen. Dies hat den Vorteil, daß in den Beschleunigungsbereichen des Aufzeichnungsträgers ein großflächiger Andruck des Aufzeichnungsträgers an das Förderband gegeben ist, so daß der Schlupf zwischen dem Förderband und dem Aufzeichnungsträger insgesamt minimal wird.

Im folgenden wird ein Ausführungsbeispiel der Erfindung bei Anwendung in einem Magnetkartenlesegerät näher erläutert. Es zeigen:

Fig. 1 den Längsschnitt eines Magnetkartenlesegerätes gemäß der Schnittlinie I-I von Fig. 2 und

Fig. 2 eine Draufsicht auf das Magnetkartenlesegerät.

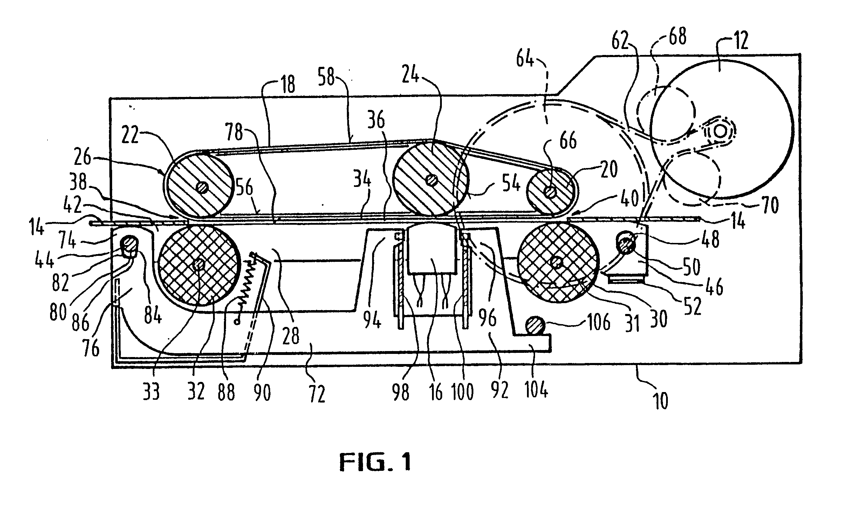

Fig. 1 zeigt ein Magnetkartenlesegerät mit einem Gehäuse 10. In diesem sind ein Antriebsmotor 12 für einen Endlosbandförderer 26 und eine Vorrichtung zum Andrücken einer aus elektromagnetischen Wandlerköpfen 16 (nur einer dargestellt) aufgebauten Auswertevorrichtung an eine relativ zu ihr bewegte Magnetkarte 14 angeordnet. Der Endlosbandförderer 26 hat ein endloses Förderband 18, eine erste Umlenkrolle 20, eine zweite Umlenkrolle 22 und eine Stützrolle 24. Ferner sind eine Andruckleiste 28 und zwei leerlaufende Andruckrollen 30 und 32 vorgesehen, wobei die Drehachse 31 der Rolle 30 an der Andruckleiste 28 befestigt ist. Ein Abschnitt 34 des Förderbandes 18 bildet zusammen mit der Andruckleiste 28 einen geradlinigen Förderweg 36, der sich in diesem Magnetkartenlesegerät zwischen einer Eintrittsstelle 38 und einer Austritts- bzw. Umkehrstelle 40 erstreckt, jedoch auch kürzer sein könnte. Auf diesem geradlinigen Förderweg 36 wird die Magnetkarte 14 reibschlüssig mit dem Förderband 18 an den elektromagnetischen Wandlerköpfen 16 vorbeibewegt. An der Austritts- bzw. Umkehrstelle 40 wird die Magnetkarte 14 entweder ausgegeben oder bei Umsteuerung des Endlosbandförderers 26 hinsichtlich der Bewegungsrichtung seines Förderbandes 18 erneut an den elektromagnetischen Wandlerköpfen 16 vorbeibewegt und dann an der Eintrittsstelle 38 ausgegeben.

Für den reibschlüssigen Transport der Magnetkarte 14 durch das Förderband 18 ist es erforderlich, daß die Magnetkarte 14 an dieses angedrückt wird. Dies erfolgt auf dem gesamten Förderweg 36 durch die Andruckleiste 28. Diese ist als gerader Stab ausgebildet, der nahe seinem einen Ende 42 an einer Schwenkachse 44 schwenkbar gelagert ist und der nahe seinem anderen Ende 46 mittels eines Langloches 48 an einem ortsfesten, seinen Schwenkweg begrenzenden Führungs-und Anschlagelement 50 in Richtung zum Endlosbandförderer 26 verschieblich geführt ist. An ihrem Ende 46 ist die Andruckleiste 28 mittels einer Andruckeinrichtung in Form einer Blattfeder 52 zum Endlosbandförderer 26 hin belastet.

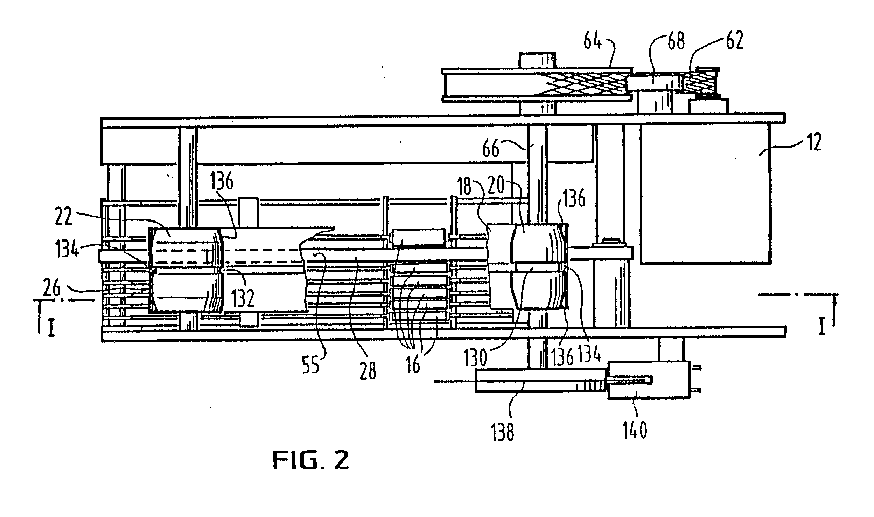

Um die Reibkraft zwischen der bewegten Magnetkarte 14 und der Andruckleiste 28 möglichst gering zu halten, ist der Magnetkarte 14 eine Schmalseite 55 (Fig. 2) der mit rechteckförmigem Querschnitt ausgebildeten Andruckleiste 28 zugewandt. Darüber hinaus ist diese Schmalseite 55 mit einem verschleißarmen Kunststoff beschichtet, der gegenüber der Magnetkarte 14 einen niedrigen Reibungskoeffizienten hat.

Die Andruckrollen 30 und 32 sind im Bereich der Eintrittsstelle 38 und der Austritts- bzw. Umkehrstelle 40 zusätzlich zur Andruckleiste 28 vorgesehen, um in diesen Beschleunigungsbereichen der Magnetkarte 14 diese großflächig an das Förderband 18 andrücken zu können. Um ein stoßfreies Durchlaufen der Kartenkanten zu gewährleisten, sind die Andruckrollen 30, 32 aus einem nachgiebigen Kunststoff wie etwa Zellvulkollan hergestellt.

Das Förderband 18 des Endlosbandförderers 26 wird im Bereich der Austritts- bzw. Umkehrstelle 40 an der ersten Umlenkrolle 20 und im Bereich der Eintrittsstelle 38 an der zweiten Umlenkrolle 22 umgelenkt und durch die den elektromagnetischen Wandlerköpfen 16 gegenüberliegende Stützrolle 24, die mit ihrer Umfangsfläche 54 an der Innenseite 56 des Förderbandes 18 anliegt, zusätzlich geführt. Durch diese Stützrolle 24 ist das Förderband 18 in Richtung zur Andruckleiste 28 geringfügig nach außen ausgelenkt. Es ist dadurch gewährleistet, daß das sehr straff gespannte Förderband 18 im Bereich der elektromagnetischen Wandlerköpfe 16 besonders fest an einer an diesen vorbeibewegten Magnetkarte 14 anliegt.

Das Förderband 18 besteht im wesentlichen aus einem flexiblen Kunststoff, vorzugsweise aus einer weichen Polyurethanmischung, die gegenüber der Magnetkarte 14 einen großen Reibungskoeffizienten hat. Es ist mit einer möglichst kleinen Dicke ausgeführt, so daß der Zugstrang des Förderbandes 18 möglichst nahe an dessen äußerer Oberfläche 58 liegt. Dies wird dadurch erreicht, daß das Förderband 18 nahe seiner äußeren Oberfläche 58 mit einer nahezu dehnungsfreien, den Zugstrang bildenden Verstärkung, vorzugsweise aus Stahlcord oder Kevlar, versehen ist.

Die Umlenkrolle 20 dient gleichzeitig als Antriebsrolle und wird ihrerseits von dem Antriebsmotor 12 über einen Antriebsriemen 62, ein Riemenrad 64 und eine Antriebsachse 66 angetrieben. Um einen exakten Gleichlauf des Förderbandes 18 zu ermöglichen, wird der Antriebsriemen 62 durch Spannrollen 68 und 70 vorgespannt.

Beim Transport der Magnetkarte 14 durch den geradlinigen Förderweg 36 hindurch wird diese an den elektromagnetischen Wandlerköpfen 16 (nur einer dargestellt) vorbeigeführt, die mittels der vorstehend erwähnten Andruckvorrichtung an der Magnetkarte 14 zur Anlage kommen. Die Andruckvorrichtung umfaßt als Hauptbestandteil einen Andruckhebel 72, der im wesentlichen U-förmig ausgebildet ist, wobei das freie Ende 74 des einen Schenkels 76 nahe der Förderwegebene 78 an der Schwenkachse 44 mittels eines Langloches 80 schwenkbar gelagert ist, dessen Längskanten 82 und 84 zur Förderwegebene 78 hin divergieren und an dem der Förderwegebene 78 abgewandten Langlochende 86 einen Abstand zueinander haben, der kleiner als der Durchmesser Schwenkachse 44 ist. Um eine in Bewegungsrichtung der Magnetkarte 14 spielfreie Lagerung des Andruckhebels 72 zu erreichen, müssen die Längskanten 82 und 84 des Langloches 80 an die Schwenkachse 44 angedrückt werden. Dies wird durch eine Zugfederanordnung 88 erreicht, die an einem Bügel 90 aufgehängt ist.

Der andere Schenkel 92 des im wesentlichen U-förmigen Andruckhebels 72 ist gabelförmig ausgebildet und trägt an seinen Gabelenden 94 und 96 den Wandlerkopf 16. Dieser wird zusammen mit dem Andruckhebel 72 mittels der Führungsbleche 98 und 100 in Andruckrichtung des Wandlerkopfes 16 verschieblich geführt.

An seinem freien Ende 102 ist der Andruckhebel 72 mit einer Anschlagnase 104 versehen. Diese kommt an einer ortsfesten Anschlagachse 106 zur Anlage und begrenzt auf diese Weise den Schwenkweg des Andruckhebels 72 zur Förderwegebene 78 hin.

In Fig. 2 ist eine Draufsicht des Magnetkartenlesegerätes gezeigt. An Hand dieser Darstellung soll die Anordnung der Andruckleiste 28 und des Endlosbandförderers 26 im Magnetkartenlesegerät nochmals verdeutlicht werden. Es sind der Antriebsmotor 12, der Antriebsriemen 62, die Spannrolle 68 und das Riemenrad 64 zu erkennen, über deren Achse 66 die als Antriebsrolle dienende Umlenkrolle 20 angetrieben wird, die ihrerseits das nur bruchstückhaft dargestellte Förderband 18 antreibt, das an der zweiten Umlenkrolle 22 umgelenkt wird. Die erste Umlenkrolle 20 und die zweite Umlenkrolle 22 sind ebenso wie die in Fig. 2 nicht dargestellte Stützrolle 24 (Fig. 1) etwa mittig mit einer Umfangsrille 130 und 132 versehen, in der eine Führungsrippe 134 des Förderbandes 18 läuft. Diese Führungsrippe 134 verhindert im Zusammenwirken mit den Umfangsrillen 130 und 132 das seitliche Abdriften des Förderbandes 18. Dieselbe Wirkung wird auch dadurch erzielt, daß die Umlenkrollen 20 und 22, deren Breite etwa der Breite des Förderbandes 18 entspricht, beiderseits der sie halbierenden Durchmesserebene kegelstumpfförmig verjüngt sind, was bei 136 zu erkennen ist. Die Breite des Förderbandes 18 entspricht dabei etwa der gesamten Breite der aus den elektromagnetischen Wandlerköpfen 16 aufgebauten Auswertevorrichtung.

Mit 138 ist eine Taktscheibe bezeichnet, die teilweise im Innern einer Lichtschranke 140 verläuft. Diese Anordnung aus Taktscheibe 138 und Lichtschranke 140 stellt einen genauen Drehzahlgeber dar, der für die Gleichlaufregelung des Antriebsmotors 12 und somit des Endlosbandförderers 26 benötigt wird.

## Patentansprüche

1. Vorrichtung zum reibschlüssigen Transport eines kartenförmigen Aufzeichnungsträgers (14), insbesondere einer Identifizierungskarte, relativ zu einer Auswertevorrichtung (16), die an einem sich zwischen einer Eintritts- und einer Austritts- bzw. Umkehrstelle (38, 40) erstreckenden geradlinigen Förderweg (36) angeordnet ist, dadurch gekennzeichnet, daß der geradlinige Förderweg (36) einerseits durch einen Abschnitt (34) eines Endlosbandförderers (26) und andererseits durch eine etwa parallel zu diesem Abschnitt (34) verlaufende, in Richtung zum Endlosbandförderer (26) bewegbare Andruckleiste (28) begrenzt ist, daß die Andruckleiste (28) mittels einer Andruckeinrichtung (52) in Richtung zum Endlosbandförderer (26) belastet ist, und daß der Endlosbandförderer (26) und die Andruckleiste (28) so ausgebildet sind, daß Krümmungen des Aufzeichnungsträgers (14) durch seine Führung zwischen dem Endlosbandförderer (26) und der Andruckleiste (28) beseitigt werden.

2. Vorrichtung nach Anspruch 1, dadurch gekennzeichnet, daß das Förderband (18) des Endlosbandförderers (26) im Bereich der Eintrittsstelle (38) und im Bereich der Austritts- bzw. Umkehrstelle (40) an jeweils mindestens einer Umlenkrolle (20, 22) umgelenkt ist.

3. Vorrichtung nach Anspruch 1 oder 2, dadurch gekennzeichnet, daß eine der Auswertevorrichtung (16) gegenüberliegende Stützrolle (24) vorgesehen ist, die mit ihrer Umfangsfläche (54) an der Innenseite (56) des Förderbandes (18) anliegt.

4. Vorrichtung nach Anspruch 3, dadurch gekennzeichnet, daß das Förderband (18) durch die Stützrolle (24) in Richtung zur Andruckleiste (28) um etwa die halbe Aufzeichnungsträgerdicke ausgelenkt ist.

5. Vorrichtung nach einem der Ansprüche 3 oder 4, dadurch gekennzeichnet, daß die Umlenkrollen (20, 22) und die Stützrolle (24) denselben Durchmesser haben.

6. Vorrichtung nach einem der vorhergehenden Ansprüche, dadurch gekennzeichnet, daß sämtliche Förderbandrollen (20, 22, 24) des Endlosbandförderers (26) jeweils mit mindestens einer Umfangsrille (130, 132) versehen sind, in der eine Führungsrippe (134) des Förderbandes (18) liegt.

7. Vorrichtung nach einem der vorhergehenden Ansprüche, dadurch gekennzeichnet, daß die Breite der Förderbandrollen (20, 22, 24) etwa der Breite des Förderbandes (18) entspricht.

8. Vorrichtung nach einem der Ansprüche 2 bis 7, dadurch gekennzeichnet, daß mindestens eine der beiden Umlenkrollen (20, 22) beiderseits der sie halbierenden Durchmesserebene kegelstumpfförmig verjüngt ist.

9. Vorrichtung nach einem der vorhergehenden Ansprüche, dadurch gekennzeichnet, daß die Breite des Förderbandes (18) etwa der Breite der Auswertevorrichtung (16) entspricht.

10. Vorrichtung nach einem der vorhergehenden Ansprüche, dadurch gekennzeichnet, daß die Dicke des Förderbandes (18) kleiner als ein Millimeter ist.

11. Vorrichtung nach einem der vorhergehenden Ansprüche, dadurch gekennzeichnet, daß das Förderband (18) aus flexiblem Kunststoff, vorzugsweise aus einer weichen Polyurethanmischung, besteht.

12. Vorrichtung nach einem der vorhergehenden Ansprüche, dadurch gekennzeichnet, daß das Förderband (18) mit wenigstens einem nahezu dehnungsfreien Zugstrang, vorzugsweise aus Stahlcord oder Kevlar, ausgebildet ist.

13. Vorrichtung nach einem der vorhergehenden Ansprüche, dadurch gekennzeichnet, daß der Zugstrang des Förderbandes (18) nahe dessen äußerer Oberfläche (58) liegt.

14. Vorrichtung nach einem der vorhergehenden Ansprüche, dadurch gekennzeichnet, daß die Andruckleiste (28) als gerader Stab ausgebildet ist, der nahe seinem einen Ende (42) schwenkbar gelagert ist und der nahe seinem anderen Ende (46) in Schwenkrichtung verschieblich geführt ist.

15. Vorrichtung nach Anspruch 14, dadurch gekennzeichnet, daß die Andruckeinrichtung (52) als eine Feder, insbesondere als eine Blattfeder, ausgebildet ist.

16. Vorrichtung nach einem der Ansprüche 14 oder 15, dadurch gekennzeichnet, daß ein Anschlagelement (50) vorgesehen ist, das den Schwenkweg des anderen Endes (46) des Stabes (28) zum Förderband (18) hin begrenzt.

17. Vorrichtung nach einem der Ansprüche 14 bis 16, dadurch gekennzeichnet, daß der Stab (28) rechteckförmigen Querschnitt hat, wobei dem Endlosbandförderer (26) eine Schmalseite (55) des Stabes (18) zugewandt ist.

18. Vorrichtung nach einem der vorhergehenden Ansprüche, dadurch gekennzeichnet, daß die Andruckleiste (28) zumindest an ihrer dem Endlosbandförderer (26) zugewandten Seite (55) mit einem Kunststoff beschichtet ist, der gegenüber dem Aufzeichnungsträger (14) einen niedrigen Reibungskoeffizienten hat.

19. Vorrichtung nach einem der vorhergehenden Ansprüche, dadurch gekennzeichnet, daß wenigstens im Bereich der Eintrittsstelle (38) und/oder im Bereich der Austritts- bzw. Umkehrstelle (40) zusätzlich zur Andruckleiste (28) eine leerlaufende Andruckrolle (30, 32) zum Andrücken des Aufzeichnungsträgers (14) an den Endlosbandförderer (26) vorgesehen ist.

20. Vorrichtung nach Anspruch 19, dadurch gekennzeichnet, daß die Andruckrollen (30, 32) aus einem nachgiebigen Kunststoff bestehen.

## Revendications

1. Dispositif de transport à friction pour supports d'enregistrement en forme de cartes (14) en particulier d'une carte d'identité, par rapport à un dispositif d'exploitation (16) qui est disposé sur un parcours (36) rectiligne s'étendant entre un point d'entrée et un point de sortie ou de retour (38, 40), caractérisé en ce que le parcours (36) rectiligne est limité d'un côté par un brin (34) d'un transporteur à bande sans fin (26) et de l'autre côté par une baguette de serrage (28) s'étendant sensiblement parallèlement à ce brin (34), déplaçable en direction du transporteur à bande sans fin (26), la baguette de serrage (28) est rappelée par un dispositif de pression (52) en direction du transporteur à bande sans fin (26) et le transporteur à bande sans fin (26) et la baguette de serrage (28) ont une configuration telle que des courbures du support d'enregistrement (14) sont aplanies par son passage entre le transporteur à bande sans fin (26) et la baguette de serrage (28).

2. Dispositif selon la revendication 1 caractérisé en ce que la bande transporteuse (18) du transporteur à bande sans fin (26) est changée de direction dans la zone du point d'entrée (38) et dans la zone du point de sortie ou de retour (40) par au moins un rouleau de renvoi (20, 22) respectivement.

3. Dispositif selon la revendication 1 ou 2, caractérisé en ce qu'il est prévu en face du dispositif d'exploitation (16) un rouleau d'appui (24) qui s'applique par sa surface périphérique (54) contre le côté intérieur (56) de la bande transporteuse (18).

4. Dispositif selon la revendication 3 caractérisé en ce que la bande transporteuse (18) est déviée par le rouleau d'appui (24) en direction de la baguette de serrage (28) de la moitié environ de l'épaisseur du support d'enregistrement.

5. Dispositif selon l'une des revendications 3 ou 4, caractérisé en ce que les rouleaux de renvoi (20, 22) et le rouleau d'appui (24) ont le même diamètre.

6. Dispositif selon l'une quelconque des revendications précédentes, caractérisé en ce que l'ensemble des rouleaux (20, 22, 24) de la bande transporteuse sans fin (26) sont prévus chacun avec au moins une rainure périphérique (130, 132) dans laquelle s'engage une nervure de guidage (134) de la bande transporteuse (18).

7. Dispositif selon l'une quelconque des revendications précédentes, caractérisé en ce que la largeur des rouleaux (20, 22, 24) de la bande transporteuse correspond sensiblement à la largeur de la bande transporteuse (18).

8. Dispositif selon l'une quelconque des revendications 2 à 7, caractérisé en ce que l'un au moins des deux rouleaux de renvoi (20, 22) est rétréci en tronc de cône des deux côtés du plan diamétral qui le partage en deux.

9. Dispositif selon l'une quelconque des revendications précédentes, caractérisé en ce que la largeur de la bande transporteuse (18) correspond sensiblement à la largeur du dispositif d'exploitation (16).

10. Dispositif selon l'une quelconque des revendications précédentes, caractérisé en ce que l'épaisseur de la bande transporteuse (18) est inférieure à un millimètre.

11. Dispositif selon l'une quelconque des revendications précédentes, caractérisé en ce que la bande transporteuse (18) est en matière plastique flexible, avantageusement en mélange mou de polyuréthane.

12. Dispositif selon l'une quelconque des revendications précédentes, caractérisé en ce que la bande transporteuse (18) est réalisée avec au moins une corde de traction presque inextensible, avantageusement en fils d'acier ou en kevlar.

13. Dispositif selon l'une quelconque des revendications précédentes, caractérisé en ce que la corde de traction de la bande transporteuse (18) se trouve à proximité de sa surface supérieure (58).

14. Dispositif selon l'une quelconque des revendications précédentes, caractérisé en ce que la baguette de serrage (28) a la configuration d'une barre rectiligne qui est articulée pour être pivotante à proximité de l'une de ses extrémités (42) et qui, à proximité de son autre extrémité (46) est guidée en déplacement dans le sens du pivotement.

15. Dispositif selon la revendication 14 caractérisé en ce que le dispositif de serrage (52) est réalisé comme un ressort, en particulier un ressort à lames.

16. Dispositif selon l'une des revendications 14 ou 15, caractérisé en ce qu'il est prévu un élément de butée (50) qui limite le parcours de pivotement de l'autre extrémité (46) de la barre (28) vers la bande transporteuse (18).

17. Dispositif selon l'une quelconque des revendications 14 à 16, caractérisé en ce que la barre (28) a une section droite rectangulaire, un petit côté (55) de la barre (28) étant tourné vers le transporteur à bande sans fin (26).

18. Dispositif selon l'une quelconque des revendications précédentes, caractérisé en ce qu'au moins sur son côté (55) tourné vers le transporteur à bande sans fin (26), la baguette de serrage (28) est couverte d'une matière plastique qui a un coefficient de frottement inférieur en comparaison du support d'enregistrement (14).

19. Dispositif selon l'une quelconque des revendications précédentes, caractérisé en ce qu'au moins dans la zone de l'endroit d'entrée (38) et/ou dans la zone de l'endroit de sortie ou de retour (40), il est prévu en complément à la baguette de serrage (28) un galet presseur (30,32) tournant fou pour serrer le support d'enregistrement (14) contre le transporteur à bande sans fin (26).

20. Dispositif selon la revendication 19 caractérisé en ce que les galets presseurs (30,32) sont en matière plastique souple.

**Claims**

1. A device for friction-driven transport of a cardshaped record medium (14), especially an identification card, relative to an evaluation device (16) disposed on a linear conveying path (36) extending between an inlet and an outlet or reversal point (38, 40), characterized in that the linear conveying path (36) is limited on the one hand by a section (34) of a closed-loop conveyor (26) and on the other hand by a pressure bar (28) movable towards the closed-loop conveyor (26) and extending approximately parallel to said section (34), in that the pressure bar (28) is biased toward the closed-loop conveyor (26) by a pressure device (52), and in that the closed-loop conveyor (26) and the pressure bar (28) are formed such that bendings of the record medium (14) are eliminated by the guiding thereof between the closed-loop conveyor (26) and the pressure bar (28).

2. A device according to claim 1, characterized in that the conveyor belt (18) of the closed-loop conveyor (26) is respectively returned at at least one return roller (20, 22) in the region of the inlet point (38) and in the region of the outlet or reversal point (40).

3. A device according to claim 1 or 2, characerized in that a supporting roller (24) is provided opposite to the evaluation device (16), the circumferential area (54) of which abuts the inner side (56) of the conveyor belt (18).

4. A device according to claim 3, characterized in that the conveyor belt (18) is deflected by the supporting roller (24) toward the pressure bar (28) by approximately half the thickness of the record medium.

5. A device according to claim 3 or 4, characterized in that the return rollers (20, 22) and the supporting roller (24) are of the same diameter.

6. A device according to any one of the foregoing claims, characterized in that all conveyor-belt rollers (20, 22, 24) of the closed-loop conveyor (26) are each provided with at least one circumferential groove (130, 132) in which a guide rib (134) of the conveyor belt (18) is disposed.

7. A device according to any one of the foregoing claims, characterized in that the width of the conveyor-belt rollers (20, 22, 24) approximately corresponds to the width of the conveyor belt (18).

8. A device according to any one of claims 2 to 7, characterized in that at least one of the two return rollers (20, 22) is tapered in the shape of a truncated cone on both sides of the diametrical plane bisecting it.

9. A device according to any one of the foregoing claims, characterized in that the width of the conveyor belt (18) approximately corresponds to the width of the evaluation device (16).

10. A device according to any one of the foregoing claims, characterized in that the thickness of the conveyor belt (18) is less than one millimeter.

11. A device according to any one of the foregoing claims, characterized in that the conveyor belt (18) is made of flexible synthetic material, preferably a soft polyurethane mixture.

12. A device according to any one of the foregoing claims, characterized in that the conveyor belt (18) is formed with at least one essentially inelastic pulling rope, preferably made of steel cord or Kevlar.

13. A device according to any one of the foregoing claims, characterized in that the pulling rope of the conveyor belt (18) is disposed near the exterior surface (58) thereof.

14. A device according to any one of the foregoing claims, characterized in that the pressure bar (28) is formed as a straight bar is pivoted near its one end (42) and movably guided near its other end (46) in the direction of rotation.

15. A device according to claim 14, characterized in that the pressure device (52) is a spring, especially a leaf spring.

16. A device according to claim 14 or 15, characterized in that a stop element (50) is provided limiting the pivotal movement of the other end (46) of the bar (28) toward the conveyor belt (18).

17. A device according to any one of claims 14 to 16, characterized in that the bar (28) is of a rectangular cross-section with a narrow side (55) of the bar (28) facing the closed-loop conveyor (26).

18. A device according to any one of the foregoing claims, characterized in that the pressure bar (28) is coated at least on its side (55) facing the closed-loop conveyor (26) with a plastic material, the coefficient of friction thereof being small relative to that of the record medium (14).

19. A device according to any one of the foregoing claims, characterized in that at least in the region of the inlet point (38) and/or in the region of the outlet or reversal point (40) in addition to the pressure bar (28), an idle pressure roller (30, 32) is provided for pressing the record medium (14) onto the closed-loop conveyor (26).

20. A device according to claim 19, characterized in that the pressure rollers (30, 32) are made of a resilient plastic material.

**FIG. 1**

EP 0 181 461 B1

FIG. 2

EP 0 181 461 B1